# EUROPÄISCHE PATENTSCHRIFT

(11) **EP 1 396 711 B1**
(45) Veröffentlichungstag und Bekanntmachung des Hinweises auf die Patenterteilung: **04.01.2006**
(21) Anmeldenummer: 02102329.6
(22) Anmeldetag: 06.09.2002
(51) Int. Cl.: G01G 23/48, G01G 23/00, G01G 21/28

(54) **Waage mit einer Vorrichtung zur Wärmeabfuhr**
Weighing device with a device for dissipating heat
Balance avec un dispositif de dissipation de chaleur

(43) Veröffentlichungstag der Anmeldung: 10.03.2004
(73) Patentinhaber: Mettler-Toledo GmbH, 8606 Greifensee (CH)
(72) Erfinder: Nufer, Bruno, 8308, Ilnau (CH); Bühler, Stefan, 8603, Schwerzenbach (CH); Lüchinger, Paul, 8610, Uster (CH); Fringeli, Eduard, 8606, Bubikon (CH)

(56) Entgegenhaltungen:
- DE-A- 10 031 415
- US-A- 4 666 005
- PATENT ABSTRACTS OF JAPAN vol. 014, no. 179 (P-1034), 10. April 1990 (1990-04-10) & JP 02 028522 A (SHIMADZU CORP), 30. Januar 1990 (1990-01-30)
- PATENT ABSTRACTS OF JAPAN vol. 008, no. 137 (P-282), 26. Juni 1984 (1984-06-26) & JP 59 037426 A (SHIMAZU SEISAKUSHO KK), 29. Februar 1984 (1984-02-29)

## Beschreibung

Die Erfindung betrifft eine Waage mit einem eine Waagschale allseitig umgebenden Wägeraum, der von einem Windschutz begrenzt ist, wovon mindestens eine vertikale Wand Bestandteil eines feststehenden Teils der Waage ist, mit mindestens einem thermoelektrischen Modul, welches in thermischer Verbindung mit dem feststehenden Teil der Waage ausserhalb des Wägeraums angebracht ist.

Bei Waagen, die vorzugsweise im Labor verwendet werden und an welche hohe Anforderungen hinsichtlich ihrer Genauigkeit gestellt werden, beispielsweise bei Analysenwaagen, entsteht häufig das Problem, dass sich infolge der Abwärme der Wägeelektronik, aber auch der Anzeigenelektronik, bei geschlossenem Windschutz die Luft im Inneren des Wägeraums erwärmt, wobei dann beim Öffnen des Wägeraums, beispielsweise zum Beschicken der Waage, durch Ausgleich mit der Umgebungsluft eine relativ starke Luftströmung durch Konvektion entsteht. Dies wirkt auch nach dem Schliessen des Windschutzes in Form einer Konvektionsströmung innerhalb des Wägeraums nach, wodurch das Wägeresultat noch geraume Zeit unstabil bleibt, gegebenenfalls bis die Konvektionsströmung im Wägeraum wieder einen etwa stationären Zustand erreicht hat. Es bleibt jedoch meist, wenn auch in geringem Masse, eine Instabilität der Luftschichtung im Wägeraum vorhanden, was dort in der Regel eine stetige Luftzirkulation zur Folge hat und das Wägeresultat stetigen, wenn auch geringen Schwankungen unterwirft.

In der DE-A-100 31 415 wird eine Analyenwaage beschrieben, mit einem Waagengehäuse, welches aus einem Unterbau und einem Gehäuseoberteil besteht, und mit einem eine Waagschale allseitig umgebenden Windschutz, der einen Wägeraum umschliesst. Es sind Hilfsmittel vorhanden, die im Wägeraum oder einem damit verbundenen Bereich einen aufwärts gerichteten Luftstrom mit kleinem Querschnitt erzeugen. Zweck des Luftstroms ist es, eine wägetechnisch günstige Temperaturverteilung im Wägeraum zu erzeugen. Dies soll mit einer erwünschten geringen stationären Luftzirkulation im Wägeraum bewerkstelligt werden. Der Luftstrom lässt sich mittels verschiedener Ausführungsformen der Waage erzeugen, beispielsweise mittels einer Wärmequelle geringer Abmessungen, die an der Rückwand des Wägeraums in deren oberer Hälfte angebracht ist, oder mittels eines mit dem Wägeraum in dessen jeweils unterer und oberer Hälfte in Verbindung stehenden Rohres, das mit einem einen Luftstrom erzeugenden Element versehen ist. Dieses Element kann ein Ventilator oder eine Wärmequelle sein.

In jeder, der in der DE-A-1 00 31 415 beschriebenen Ausführungsformen, wird ein Element verwendet, welches zusätzliche Wärme in die ohnehin schon durch eigene Verlustleistung thermisch belastete Waage einbringt. Im Wägeraum entsteht so eine Temperatur, die vorwiegend oberhalb der Aussentemperatur liegt, teilweise sogar um mehrere Grad, so dass die oben erwähnte Luftströmung beim Öffnen des Windschutzes nicht vermieden wird. Ausserdem besteht die Gefahr, dass eine, wenn auch erwünschte geringe Luftzirkulation, wenn sie an oder nahe der Waagschale stattfindet, beziehungsweise vorbeiführt, das Wägeergebnis beeinflusst.

In der JP 2586115 B2 wird eine Waage offenbart, deren Wägeraum so temperiert ist, dass dort etwa die gleiche Temperatur herrscht, wie in der Umgebung der Waage und somit das Problem der Konvektionsströmung beim Öffnen des Windschutzes vermieden wird. Hierfür sorgt ein, ausserhalb des Wägeraums, vorzugsweise im oberen Bereich des Waagengehäuses, angebrachtes thermoelektrisches Modul. Dieses befindet sich in thermischem Kontakt mit einer Kühlplatte, die entlang der Trennwand des Wägeraums vom Waagengehäuse, in welchem die Elektronik untergebracht ist, verläuft oder durch die Trennwand selbst repräsentiert ist. Ihr Zweck ist, die von der Wägeelektronik erzeugte Wärme vom Wägeraum abzuschirmen, so dass sich die Luft im Inneren des Wägeraums ständig auf der selben Temperatur, wie die Umgebungsluft befindet. Folglich ist auch bei offenem Windschutz keine temperaturinduzierte Konvektion zwischen Wägeraum und Umgebung vorhanden. Ebenso wenig hat das von aussen in den Wägeraum eingebrachte Wägegut, das heisst das Wägegefäss, das Wägegut selbst sowie die von aussen eingebrachte Luft im Wägegefäss einen Einfluss auf das Wägeergebnis, da sie sich bereits auf der im Wägeraum herrschenden Temperatur befinden.

Die in der JP 2586115 B2 anhand der Zeichnungen gezeigten Lösungen für die Anordnung des thermoelektrischen Moduls wird als problematisch empfunden. Dessen Platzierung, vorzugsweise im oberen Bereich des Waagengehäuses, mag zwar dem Zweck der Wärmeabfuhr einer der thermischen Abschirmung der Elektronik dienenden Kühlplatte genügen, und damit die Temperatur des Wägeraums in etwa an die Umgebungstemperatur angleichen, sie birgt jedoch die Gefahr einer instabilen Temperaturschichtung der sich im Wägeraum befindlichen Luft, bei welcher die kalte Luft eher oben angeordnet und die warme Luft sich im unteren Teil des Wägeraums befindet. Dies hat zwangsläufig eine Konvektionsströmung innerhalb des Wägeraums zur Folge, so dass diese sich bei sehr empfindlichen Waagen im Wägeresultat durch eine schwankende Anzeige desselben, bemerkbar macht.

Aufgabe der Erfindung ist es daher, eine wägetechnisch günstige Luftschichtung im Wägeraum und gegebenenfalls auch in einem angrenzenden Messzellenraum zu erzeugen und zusätzlich die Wärme, welche infolge der Verlustleistung der elektronischen Komponenten der Waage entsteht, nahezu vollständig aus der Waage zu entfernen.

Diese Aufgabe wird gelöst durch die Merkmale des unabhängigen Anspruchs. Eine Waage mit einem eine Waagschale allseitig umgebenden Wägeraum, der von einem Windschutz begrenzt ist, wovon mindestens eine vorwiegend vertikale Wand Bestandteil eines feststehenden Teils der Waage ist, ist mit mindestens einem thermoelektrischen Modul ausgestattet, welches sich in thermischer Verbindung mit dem feststehenden Teil der Waage befindend ausserhalb des Wägeraums angebracht ist. Das thermoelektrische Modul ist nahe dem feststehenden Teil der Waage im unteren Bereich der Waage platziert und die mindestens eine vertikale Wand steht mit ihrem unteren Ende in thermischer Verbindung zum thermoelektrischen Modul und ist derart gestaltet, dass sich in der feststehenden, vertikalen Wand ein Temperaturgradient ausbildet, wobei die Temperatur dieser Wand von unten nach oben zunimmt. Die kalte Seite des thermoelektrischen Moduls steht mit einem tragenden Teil der Waage in Kontakt und die warme Seite des thermoelektrischen Moduls weist nach aussen.

Auf diese Weise kann das Innere des Wägeraums nahe der Umgebungstemperatur gehalten werden. Es wird gleichzeitig gezielt ein Temperaturgradient in der feststehenden, vorwiegend vertikalen Wand erzeugt, wobei die Temperatur von unten nach oben zunimmt. Dabei ist die Anordnung des thermoelektrischen Moduls und dessen thermische Ankopplung an die Waage so gewählt, dass auch ein Temperaturgradient im Wägeraum entsteht, wobei für eine betriebsbereite Waage die Temperatur von unten nach oben zunimmt. Dies bewirkt eine stabile Luftschichtung im Wägeraum, welche auch durch Öffnen und Schliessen des Windschutzes wenig beeinträchtigt wird. Infolge der stabilen Luftschichtung wird die Konvektion unterbunden und es wirken keine Kräfte auf die Waagschale, wodurch das angezeigte Wägeergebnis stabil bleibt.

Der feststehende Teil der Waage weist eine sich Ober die gesamte Länge der Waage erstreckende Bodenplatte aus gut thermisch leitendem Material auf, welche in guter thermischer Verbindung mit dem thermoelektrischen Modul steht. In einer bevorzugten Ausführungsform ist das thermoetektrische Modul direkt an der Bodenplatte befestigt.

Durch dieses Absenken der Temperatur im Bodenbereich, wobei diese nahe der Umgebungstemperatur, vorzugsweise um wenige zehntel bis hunderstel Grad unterhalb derer liegt, wird zumindest bei geschlossenem Wägeraum die erwünschte stabile Luftschichtung innerhalb des Wägeraums erreicht, wobei die Temperatur der Luft im Wägeraum insgesamt nahe derjenigen der Umgebungsluft liegt, bevorzugt im Bodenbereich um einige zehntel Grad tiefer und im oberen Bereich um wenige zehntel Grad höher als die Umgebungstemperatur liegt. Somit ist im Wägeraum, zumindest in dessen unterem Bereich nahe der Waagschale keine Konvektion vorhanden, und das Wägeergebnis ist stabil.

Umgibt der feststehende Teil der Waage, sozusagen als Waagengehäuse, einen vorzugsweise hinter dem Wägeraum angeordneten Messzellenraum, wobei die feststehende vertikale Wand als Trennwand zwischen Wägeraum und Messzellenraum ausgebildet ist, so wird auch die Luft im Messzellenraum einen vertikalen Temperaturgradienten aufweisen und die Luftschichtung wird daher weitgehend konvektionsfrei stabil bleiben.

Die Temperaturdifferenz zwischen oberem und unterem Ende der feststehenden vertikalen Wand und/oder des Wägeraums ist nicht besonders hoch, sondern liegt maximal bei Werten von 1°C, insbesondere bei Werten bis zu 0,5°C. In etwa die gleiche Temperaturdifferenz entsteht in einem gegebenenfalls vorhandenen Messzellenraum.

In einer besonders bevorzugten Ausgestaltung der Erfindung ist ein mit der kalten Seite des thermoelektrischen Moduls verbundener Wärmeableitkörper vorhanden, welcher sich mit der feststehenden vertikalen Wand und der Bodenplatte in Kontakt befindet. Dieser Wärmeableitkörper dient als Wärmesenke und gewährleistet somit eine gute Wärmeabfuhr aus der Waage.

Zur Unterstützung der Erzeugung eines Temperaturgradienten entlang der feststehenden Wand, dem Wägeraum und/oder dem Messzellenraum ist die Wägeelektronik in der oberen Hälfte, insbesondere im oberen Drittel des Waagengehäuseinneren eingebaut, wodurch ein den Temperaturgradienten in der feststehenden vertikalen Wand verstärkender Wärmefluss von der Wägeelektronik zur feststehenden vertikalen Wand erfolgt. Insbesondere wird die Stabilität des Temperaturgradienten in der vertikalen Wand auch durch deren besondere Ausgestaltung, nämlich dadurch dass deren Materialstärke von unten nach oben abnimmt, gewährleistet

Auf der warmen Seite des thermoelektrischen Moduls ist ein Kühlkörper für eine rasche Wärmeabfuhr zur Umgebungsluft angebracht.

Die Waage weist in einer bevorzugten Ausführungsform eine Anzeige- und Bedieneinheit auf, die einerseits in einen thermischen Kontakt mit der Bodenplatte bringbar ist, wodurch ein Teil der durch die Verlustleistung der Anzeige- und Bedieneinheit erzeugten Wärme über die Bodenplatte und gegebenenfalls den Wärmeableitkörper und das thermoelektrische Modul aus der Waage gebracht wird. Andererseits nimmt die Bodenplatte die Abwärme der Anzeige- und Bedieneinheit auch über Wärmestrahlung und Wärmeleitung durch die Luft auf. Auch kann die Bodenplatte derart ausgestaltet sein, dass sie die Frontwand des Windschutzes in deren unterem Bereich etwas überlappt und so den Wägeraum gegenüber der Wärmestrahlung von der Anzeige- und Bedieneinheit abschirmt.

Weiterhin ist, als eine besondere Ausgestaltung der Erfindung, ein mit der Bodenplatte in guter thermischer Verbindung stehender, vorzugsweise aus Metall gefertigter Rahmen der Frontwand eine Vorrichtung, die einerseits der Abschirmung der von der Anzeige- und Bedieneinheit abgestrahlten Wärme dient und gleichzeitig die Ausbildung eines Temperaturgradienten auch in der Frontwand begünstigt.

Das Abführen der von der Anzeige- und Bedieneinheit erzeugten Wärme verhindert eine Erwärmung des Wägeraums in dem der Anzeige- und Bedieneinheit zugewandten Bereich und erlaubt es daher, in flexibler Weise eine Anzeige- und Bedieneinheit gemäss den Anforderungen an die Anwendung der Waage zu installieren, vorwiegend unabhängig von deren zu erwartender Verlustleistung.

Der Erfindungsgedanke wird anhand eines in den Figuren stark schematisiert dargestellten Ausführungsbeispiels im Folgenden näher erläutert. Es zeigen:
- Figur 1: einen Längsschnitt durch eine Waage mit einem ausserhalb des Waagengehäuses angebrachten thermoelektrischen Modul,
- Figur 2: einen Querschnitt durch die Trennwand zwischen Wägeraum und Messzellenraum der Waage, in welcher sich vorzugsweise ein Temperaturgradient ausbildet,
- Figur 3: die Waage in der gleichen Darstellung wie in Figur 1 mit Illustration der Temperaturverteilung und des im Betrieb vorhandenen Wärmeflusses in der Waage.

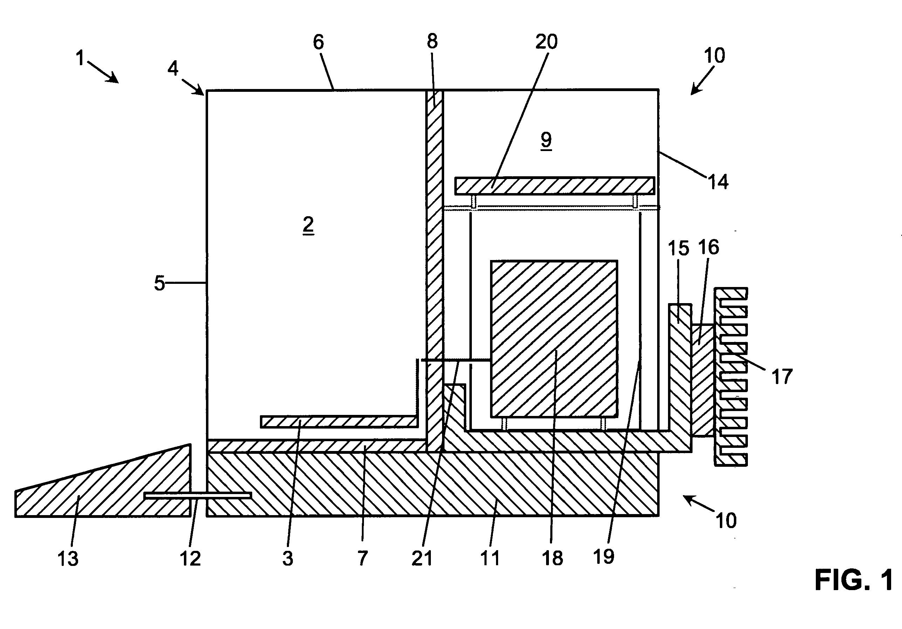

Die Figur 1 zeigt im Längsschnitt eine Waage, wie sie häufig als Analysenwaage zum hochpräzisen Wiegen kleinster Stoffmengen im Labor Verwendung findet. Die Waage 1 besitzt einen Wägeraum 2, in welchem die Waagschale 3 untergebracht ist, und welcher von einem Windschutz 4 umgeben ist. Letzterer weist eine vorzugsweise feststehende Frontwand 5 auf und zum Öffnen und Schliessen des Wägeraums 2 bewegbare Wände, die einerseits als Abdeckwand 6 den Wägeraum 2 nach oben begrenzen und andererseits als Seitenwände (hier nicht sichtbar) die seitliche Begrenzung des Wägeraums 2 darstellen. Nach unten und nach hinten (hinsichtlich der Arbeitsstellung der Waage) wird der Wägeraum 2, ebenfalls als Teile des Windschutzes 4, durch einen Wägeraumboden 7 einerseits und durch eine vertikale feststehende Wand andererseits, die in der dargestellten Ausführungsform eine Trennwand 8 zu einem Messzellenraum 9 bildet, abgeschlossen. Im Messzellenraum 9 sind vorwiegend die von einem weiteren separaten Gehäuse 19 umschlossene Wägezelle 18 und die Wägeelektronik 20 untergebracht. Der Messzellenraum 9 insgesamt wird vom Waagengehäuse 10 umgeben, zu welchem auch eine sich über die gesamte Länge der Waage 1 erstreckende Bodenplatte 11 gehört. Diese Bodenplatte 11 ist nicht zwingend massiv, sondern kann als hohler Bodenraum ausgebildet sein, in welchem beispielsweise eine hier nicht dargestellte Kalibriervorrichtung untergebracht sein kann. In jedem Fall ist die Bodenplatte 11 ein tragender Bestandteil des Waagengehäuses 10. Im vorderen Bereich der Bodenplatte ist eine Befestigungsvorrichtung 12 für eine Anzeige- und Bedieneinheit 13 vorgesehen, wobei diese vorzugsweise vom Waagengehäuse 10 lösbar ausgestaltet ist.

Die in der dargestellten Ausführungsform gezeigte Waagschale 3 ist mit der Wägezelle 18 mittels eines durch die Trennwand 8 reichenden Auslegers 21 verbunden.

Mit dem Waagengehäuse 10 fest verbunden, insbesondere mit der Bodenplatte 11 und mit der Trennwand 8, die sowohl einen Teil des Windschutzes 4 als auch einen Teil des Waagengehäuses 10 bildet, und mindestens den Boden des Messzellenraums 9 abdeckend ist ein Wärmeableitkörper 15 angebracht. An diesem ist, einen guten thermischen Kontakt bildend, ein thermoelektrisches Modul 16, insbesondere ein Peltiermodul, befestigt, und zwar mit seiner kalten Seite dem Wärmeableitkörper 15 zugewandt. An der warmen Seite des thermoelektrischen Moduls 16 ist ein mit Kühlrippen versehener Kühlkörper 17 angebracht, der für einen raschen Wärmeaustausch mit der Umgebungsluft sorgt.

Die Funktion des thermoelektrischen Moduls 16 besteht darin, die in der Waage 1 erzeugte Abwärme aus dieser zu entfernen und nach aussen an die Umgebungsluft abzugeben. Als Wärmequellen kommen hauptsächlich die im Messzellenraum 9 vorwiegend im oberen Bereich desselben angeordnete Wägeelektronik 20 sowie eine vorwiegend im vorderen Bereich der Waage 1 angeordnete Anzeige- und Bedieneinheit 13 in Frage. Eine gute Ableitung überschüssiger Wärme leistet das thermoelektrische Modul 16 vor allem durch seine gute thermische Verbindung mit dem Wärmeableitkörper 15 und über diesen mit der Bodenplatte 11 und der Trennwand 8. Somit können alle Teile der Waage 1, insbesondere aber der Wägeraum 2 und der Messzellenraum 9 stets auf einer Temperatur gehalten werden, die nahe der Temperatur der die Waage 1 umgebenden Luft liegt.

Die Anordnung des thermoelektrischen Moduls 16 im unteren Bereich einer Waage 1 hat jedoch noch einen weiteren nützlichen Effekt. Es kann auf diese Weise, insbesondere in Zusammenwirken mit der in der oberen Hälfte oder gar im oberen Drittel des Messzellenraumes 9 angeordneten und als Wärmequelle auch auf die Trennwand 8 wirkenden Wägeelektronik 20, sowie aufgrund der Ausgestaltung der Trennwand 8 selbst (siehe weiter unten), gezielt ein Temperaturgradient entlang der Trennwand 8 mit zunehmender Temperatur von unten nach oben erzeugt werden. Der Temperaturunterschied zwischen oberem und unterem Ende der Trennwand 8 liegt bei maximal 1°C, vorzugsweise bei Werten bis 0,5°C. Das Temperaturprofil der Trennwand 8 überträgt sich auf die beidseitig befindlichen Luftschichten. Dies bedeutet, dass sowohl im Wägeraum 2 als auch im Messzellenraum 9 eine stabile Luftschichtung vorherrscht, wobei die Temperatur von unten nach oben zunimmt, was insbesondere durch die sich in Kontakt mit dem Wärmeableitkörper 15 und damit ebenfalls auf der etwas tieferen Temperatur befindlichen Bodenplatte 11 unterstützt wird. Die Temperatur der Bodenplatte 11 darf dabei durchaus um bis zu wenigen zehntel Grad unterhalb der Umgebungstemperatur liegen.

Als Folge der stabilen Luftschichtung ist eine Luftzirkulation sowohl im Wägeraum 2 als auch im Messzellenraum 9 weitgehend unterbunden. Im Wägeraum 2 kommt sie insbesondere im Bereich um die Waagschale 3 zum Erliegen, da dort infolge der gekühlten Bodenplatte 11 die Luftschichten stabiler Temperatur sich über den gesamten horizontalen Querschnitt erstrecken.

Die gesamte Vorrichtung zur Wärmeabfuhr ist derart dimensioniert, und die Leistung des thermoelektrischen Moduls 16 ist so eingestellt, dass der Nettowärmefluss in der Waage 1 etwa bei Null liegt. Dies hat zur Folge, dass sich die Waage 1 insgesamt auf einer Temperatur nahe ihrer Umgebungstemperatur befindet, das heisst im Bodenbereich meist etwas unterhalb und im Bereich nahe ihrer Abdeckung 6 etwas oberhalb der Umgebungstemperatur liegt.

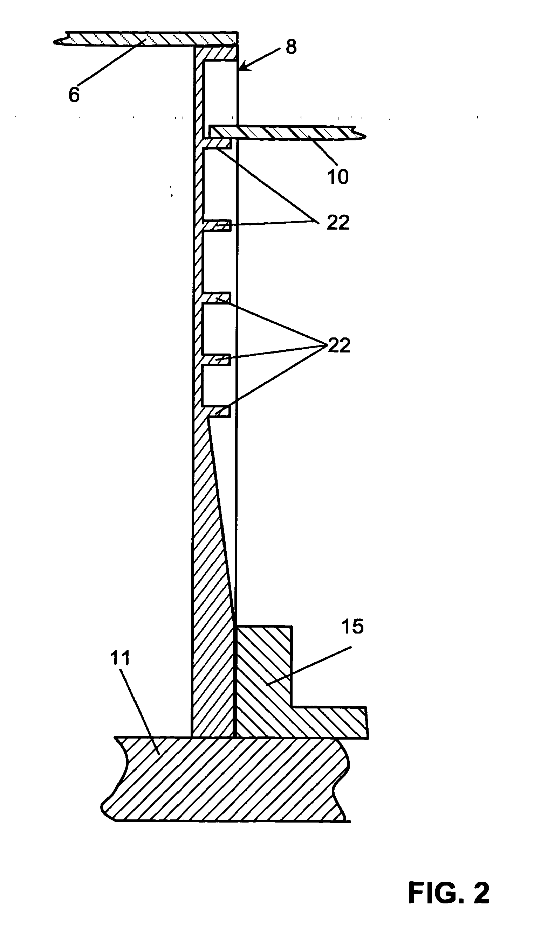

In der Figur 2 ist als Schnittzeichnung die Trennwand 8 in einer Ausführungsform, wie sie beispielsweise durch Gusstechnik aus Aluminium hergestellt werden kann, dargestellt. In dieser Form wird die Ausbildung eines stabilen Temperaturgradienten in der Trennwand 8 besonders begünstigt. Der mit dem Wärmeableitkörper 15 und der Bodenplatte 11 in Kontakt stehende untere Bereich der Trennwand 8 besteht aus massivem Material, und die Wandstärke verjüngt sich mit zunehmender Höhe. Im oberen Bereich der Trennwand hingegen ist die Materialstärke erheblich geringer, hier beträgt die Wandstärke nur etwa ein Fünftel derjenigen des unteren Bereichs und ist durch Querstreben 22 stabilisiert. Auf diese Weise nimmt die Wärmeleitfähigkeit der Trennwand 8 mit zunehmender Höhe ab, was in Zusammenwirken mit der gekühlten Bodenplatte 11 und vor allem mit dem gekühlten Wärmeableitkörper 15 einerseits und durch die Aufheizung des oberen Bereichs infolge der dort angeordneten Wägeelektronik 20 andererseits, der Ausbildung eines stabilen Temperaturgradienten dient. Die auf dem oberen Ende der Trennwand 8 aufliegende Abdeckwand 6 ist vorzugsweise aus Glas und der durch eine obere Querstrebe 22 geführte rückwärtige Teil des Waagengehäuses 10 ist aus Kunststoff gefertigt.

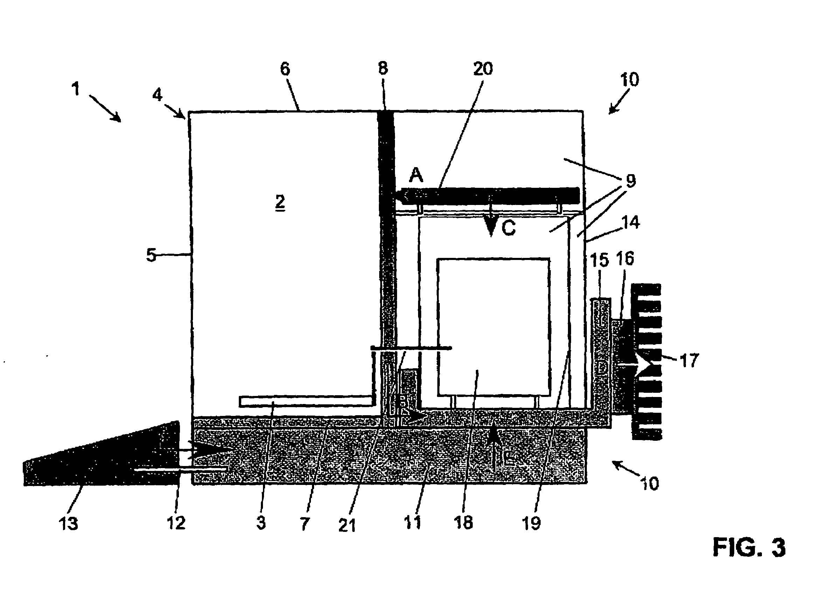

Die Figur 3 zeigt, ebenfalls in einer Schnittzeichnung analog derjenigen in Figur 1, stark schematisiert den Wärmefluss in der Waage 1. Dabei sind die Bereiche hoher Temperatur, beziehungsweise die Wärmequellen dunkel dargestellt und die Bereiche niedriger Temperatur, beziehungsweise die Wärmesenken in hellem Grau gehalten. Die Pfeile A bis F verdeutlichen den jeweiligen Wärmefluss. Es erfolgt eine Wärmezufuhr (siehe Pfeil A) im oberem Bereich der Trennwand 8 und eine Wärmeabfuhr (siehe Pfeil B) an deren unterem Ende. Insbesondere wird in der Figur auch der entlang der Trennwand 8 ausgebildete Temperaturgradient deutlich, der, wie oben bereits erwähnt, zum einen von der oben angeordneten, als Wärmequelle wirkenden Wägeelektronik 20 und zum anderen von der als Wärmesenke wirkenden Bodenplatte 11 aufgebaut wird. Die Stabilität des Temperaturgradienten entlang der Trennwand 8 wird durch die in Figur 2 gezeigte oder eine ähnliche Ausführung, mit von unten nach oben abnehmender Materialstärke, unterstützt.

Weitere Verlustleistung der Wägeelektronik 20 wird (siehe Pfeil C in der Figur 3) an den sich oberhalb der Wägezelle 18 befindenden Luftraum abgegeben und trägt hier zu einer besonders stabilen Luftschichtung im Messzellenraum 9 bei, das heisst ohne Konvektion, da das untere Ende des Messzellenraums 9 direkt vom Wärmeableitkörper 15 gebildet wird und somit sich ein erwünschter Temperaturgradient ausbildet. Der Wärmeableitkörper 15, der mit der kalten Seite des thermoelektrischen Moduls 16 verbunden ist, ist aus gut wärmeleitendem Material, beispielsweise Aluminium, gefertigt, so dass er die Temperatur der kalten Seite des thermoelektrischen Moduls 16 besitzt. Die warme Seite des thermoelektrischen Moduls 16 ist Ober einen mit Kühlrippen versehenen Kühlkörper 17 mit der Umgebungsluft gekoppelt und gibt an diese die Abwärme aus der Waage - siehe weisser Pfeil D, der die Funktion des thermoelektrischen Moduls 16 als Pumpe für Wärme verdeutlicht - zusammen mit der eigenen Verlustleistung ab. In analoger Weise könnte hier auch ein aktives Element, beispielsweise ein Ventilator, der für einen Abtransport der Wärme von der warmen Seite des thermoelektrischen Moduls 16 zur Umgebungsluft sorgt, an dieser angeordnet sein.

Eine weitere Wärmequelle steilt die Anzeige- und Bedieneinheit 13 dar. Im Zuge zunehmenden Einsatzes von programmierbaren Waagen, kommt der Ausgestaltung einer Anzeige- und Bedieneinheit für eine Waage eine immer grössere Bedeutung zu. Besonders gefragt sind in diesem Zusammenhang grossflächige und aktiv hinterleuchtete Anzeige- und Bedieneinheiten. Diese haben allerdings einen höheren Energiebedarf und folglich auch eine höhere Verlustleistung, als konventionelle Anzeige- und Bedieneinheiten. Die aus der Verlustleistung resultierende Abwärme der Anzeige- und Bedieneinheit 13 kann nun allerdings die thermischen Verhältnisse im Wägeraum 2 dahingehend beeinflussen, dass sie als Wärmequelle im unteren Bereich der Frontwand 5 wirkt und dort die Luft im Wägeraum 2 erwärmt, was sich selbstverständlich in sehr ungünstiger Weise auf eine stabile Luftschichtung auswirkt.

Um diese durch die Anzeige- und Bedieneinheit 13 als Wärmequelle verursachte Konvektion im Wägeraum 2 zu vermeiden, wird deren Abwärme über die Bodenplatte 11, die thermisch an den Wärmeableitkörper 15 angekoppelt ist (siehe Pfeil E), und die dadurch weitgehend auf der Temperatur des Wärmeableitkörpers 15 gehalten wird, abgeleitet. Somit entsteht ein Wärmefluss (siehe Pfeil F) von der Anzeige- und Bedieneinheit 13 in die Bodenplatte 11, teils über die Befestigungsvorrichtung 12, teils über Wärmeleitung durch Luft, aber auch durch Wärmestrahlung, wodurch die Anzeige- und Bedieneinheit 13 nicht mehr die Wirkung einer die Luft im unteren Bereich des Wägeraums 2 beeinflussenden Wärmequelle hat. Mittels der Bodenplatte 11 ist der gesamte Boden 7 des Wägeraums 2 gekühlt und die bodennahen Luftschichten befinden sich auf einer Temperatur, die etwa der Umgebungstemperatur entspricht, vorzugsweise noch um einige Zehntel Grad darunter liegt. Dies trägt zu einer, zumindest im Bereich der Waagschale 3, konvektionsfreien Luftschichtung im Wägeraum 2 bei.

Es ist nun denkbar, die Frontwand 5 des Wägeraums 2 mit einem Rahmen, beispielsweise aus Metall zu versehen, und auf diese Weise die Frontwand 5 thermisch an die Bodenplatte 11 anzukoppeln. Es entsteht somit auch in der Frontwand 5 ein Temperaturgradient, vorzugsweise in vertikaler Richtung und gleichzeitig wird eine Abschirmung des Wägeraums 2 gegenüber der aufgrund der Verlustleistung von der Anzeige- und Bedieneinheit 13 abgestrahlten und/oder über Konvektion der Aussenluft von dieser zum Wägeraum 2 transportierten Wärme erreicht.

In einer anderen Gestaltung der Frontwand 5 kann diese an ihrem unteren Ende mit einer Blende (hier nicht gezeigt) versehen sein, welche thermisch an die Bodenplatte 11 angekoppelt ist und somit ebenfalls den Wägeraum 2 vor einer von der Anzeige-und Bedieneinheit 13 herrührenden thermischen Belastung schützt. Als weitere spezielle Ausgestaltungen der Frontwand 5 zur thermischen Abschirmung des Wägeraums 2 gegenüber der Anzeige- und Bedieneinheit 13 ist es auch denkbar, die Frontwand 5 aus einem speziellen Glas, welches eine genügend grosse Wärmeleitfähigkeit aufweist, zu fertigen, so dass die vorzugsweise mit der gekühlten Bodenplatte 11 in Verbindung stehende Frontwand 5 in ihrem unteren Bereich vermehrt gekühlt wird.

Es versteht sich von selbst, dass in einer Waage ein thermoelektrisches Modul 16 auch an anderer Stelle der Bodenplatte 11, als nahe dem unteren Bereich der Rückwand 14 des Messzellenraums 9 angeordnet werden kann. Beispielsweise ist es denkbar unterhalb der Bodenplatte 11 ein solches anzuordnen oder im seitlichen Bereich der Bodenplatte 11, beispielsweise jeweils unterhalb einer jeden Seitenwand des Wägeraums 2. Es ist in jedem Fall geboten, das thermoelektrische Modul 16 im unteren Bereich der Waage 1 anzuordnen, wobei dessen kalte Seite vorwiegend mit einem tragenden Teil der Waage 1 in Kontakt steht.

Es sind nun auch Waagen bekannt, deren Wägezelle und Wägeelektronik unterhalb des Bodens des Wägeraums in einem dort vorgesehenen Messzellenraum angeordnet sind. Auch für solche Waagen kann ein thermoelektrisches Modul als Vorrichtung zur Wärmeabfuhr nutzbringend eingesetzt werden, beispielsweise, indem es an dem den feststehenden Teil der Waage bildenden Messzellenraum mit seiner kalten Seite sich mit diesem in Kontakt befindend, angebracht wird. Vorzugsweise steht das thermoelektrische Modul, dann auch in gutem thermischen Kontakt mit dem Wägeraumboden, so dass der in der vorwiegend vertikalen feststehenden Wand erzeugte Temperaturgradient auch die Luft im Wägeraum erfasst, was für eine stabile Luftschichtung sorgt. Gegebenenfalls ist es erforderlich, für die Ausbildung eines stabilen Temperaturgradienten im Wägeraum und zumindest einer der diesen begrenzenden Wände, letztere in ihrem oberen Bereich etwas aufzuheizen, was entweder mittels eines dort platzierten Heizelements oder der gezielten Zuleitung der von der warmen Seite des thermoelektrischen Moduls aufgeheizten Luft zu bewerkstelligen ist.

### Bezugszeichenliste

- 1: Waage
- 2: Wägeraum
- 3: Waagschale
- 4: Windschutz
- 5: Frontwand
- 6: Abdeckwand
- 7: Wägeraumboden
- 8: Vertikale feststehende Wand, Trennwand
- 9: Messzellenraum
- 10: Waagengehäuse
- 11: Bodenplatte
- 12: Befestigungsvorrichtung
- 13: Anzeige- und Bedieneinheit
- 14: Rückwand
- 15: Wärmeableitkörper
- 16: Thermoelektrisches Modul
- 17: Kühlkörper
- 18: Wägezelle
- 19: Gehäuse der Wägezelle
- 20: Wägeelektronik
- 21: Ausleger
- 22: Querstrebe
- A: den Wärmefluss anzeigender Pfeil
- B: den Wärmefluss anzeigender Pfeil
- C: den Wärmefluss anzeigender Pfeil
- D: den Wärmefluss anzeigender Pfeil
- E: den Wärmefluss anzeigender Pfeil
- F: den Wärmefluss anzeigender Pfeil

## Patentansprüche

1. Waage (1) mit einem eine Waagschale (3) allseitig umgebenden Wägeraum (2), der von einem Windschutz (4) begrenzt ist, wovon mindestens eine vertikale Wand (8) Bestandteil eines feststehenden Teils der Waage (1) ist, mit mindestens einem thermoelektrischen Modul (16), welches In thermischer Verbindung mit dem feststehenden Teil der Waage (1) ausserhalb des Wägeraums (2) angebracht ist, wobei das thermoelektrische Modul (16) nahe dem feststehenden Teil der Waage (1) im unterem Bereich der Waage platziert ist, und die mindestens eine vertikale Wand (8) mit ihrem unteren Ende in thermischer Verbindung zum thermoelektrischen Modul (16) steht und derart gestaltet ist, dass sich in der vertikalen Wand (8) ein Temperaturgradient ausbildet, wobei die Temperatur dieser Wand (8) von unten nach oben zunimmt, **dadurch gekennzeichnet, dass** die kalte Seite des thermoelektrischen Moduls mit einem tragenden Teil der Waage (1) in Kontakt steht und die warme Seite des thermoelektrischen Moduls (6) nach aussen weist.

2. Waage (1) nach Anspruch 1, **dadurch gekennzeichnet, dass** der feststehende Teil der Waage als tragendes Teil eine sich über die gesamte Länge der Waage (1) erstreckende Bodenplatte (11) aus gut thermisch leitendem Material aufweist, welche in thermischer Verbindung mit dem tharmoelektrischen Modul (16) steht.

3. Waage (1) nach Anspruch 1 oder 2, **dadurch gekennzeichnet, dass** der feststehende Teil der Waage (1) als Waagengehäuse (10) einen Messzellenraum (9) umgibt, wobei die feststehende vertikale Wand (8) als Trennwand zwischen Wägeraum (2) und Messzellenraum (9) ausgebildet ist

4. Waage (1) nach Anspruch 3, **dadurch gekennzeichnet, dass** die Luft im Messzellenraum (9) einen vertikalen Temperaturgradienten aufweist, wobei die Temperatur von unten nach oben zunimmt.

5. Waage (1) nach einem der Ansprüche 1 bis 4, **dadurch gekennzeichnet, dass** die Luft im Wägeraum (2), zumindest in der Umgebung der Waagschale (3), einen vertikalen Temperaturgradienten aufweist, wobei die Temperatur von unten nach oben zunimmt.

6. Waage (1) nach einem der Ansprüche 1 bis 5, **dadurch gekennzeichnet, dass** die Temperaturdifferenz zwischen oberem und unterem Ende der feststehenden vertikalen Wand (8) und/oder des Wägeraums (2) maximal bei 1°C, insbesondere bei Werten bis zu 0,5°C liegt.

7. Waage (1) nach einem der Ansprüche 3 bis 6, **dadurch gekennzeichnet, dass** die Temperaturdifferenz zwischen oberem und unterem Ende des Messzellenraums (9) maximal bei 1°C, insbesondere bei Werten bis zu 0,5°C liegt.

8. Waage (1) nach einem der Ansprüche 2 bis 7, **dadurch gekennzeichnet, dass** die Bodenplatte (11) eine Temperatur aufweist, die maximal um einige zehntel Grad oberhalb der Umgebungstemperatur, bevorzugt jedoch um einige zehntel Grad unterhalb der Umgebungstemperatur liegt.

9. Waage (1) nach einem der Ansprüche 2 bis 8, **dadurch gekennzeichnet, dass** das mindestens eine thermoelektrische Modul (16) mit seiner kalten Seite an der Bodenplatte (11) angebracht ist, wobei dessen warme Seite nach aussen weist.

10. Waage (1) nach einem der Ansprüche 2 bis 8, **dadurch gekennzeichnet, dass** ein Wärmeableitkörper (15) vorhanden ist, der mit der Bodenplatte (11) und der vertikalen Wand (8) in Verbindung steht, und dass das thermoelektrische Modul (16) mit seiner kalten Seite an dem Wärmeableitkörper (15) angebracht ist, wobei die warme Seite des thermoelektrischen Moduls (16) nach aussen weist.

11. Waage (1) nach einem der Ansprüche 1 bis 10, **dadurch gekennzeichnet, dass** das thermoelektrische Modul (16) auf seiner warmen Seite mit einem Kühlkörper (17) für eine rasche Wärmeabfuhr zur Umgebungsluft versehen ist.

12. Waage (1) nach einem der Ansprüche 3 bis 11, **dadurch gekennzeichnet, dass** die Wägeelektronik (20) in der oberen Hälfte, insbesondere im oberen Drittel, des Messzellenraumes (9) angeordnet ist, wodurch ein den Temperaturgradienten in der feststehenden vertikale Wand (8) verstärkender Wärmefluss von der Wägeelektronik (20) zur feststehenden vertikale Wand (8) erfolgt.

13. Waage (1) nach einem der Ansprüche 1 bis 12, **dadurch gekennzeichnet, dass** die Materialstärke der mindestens einen vertikalen Wand (8) von unten nach oben abnimmt.

14. Waage (1) nach einem der Ansprüche 1 bis 13, **dadurch gekennzeichnet, dass** eine Anzeige- und Bedieneinheit (13) vorhanden ist, die zur Wärmeabfuhr ihrer Verlustleistung in einen thermischen Kontakt mit der Bodenplatte (11) bringbar ist.

15. Waage (1) nach einem der Ansprüche 1 bis 14, **dadurch gekennzeichnet, dass** eine Frontwand (5) Bestandteil des den Wägeraum (2) begrenzenden Windschutzes (4) ist, und dass diese einen Rahmen aus Metall aufweist, welcher mit der Bodenplatte (11) verbunden ist.

## Claims

1. Balance (1) with a weighing pan (3) surrounded on all sides by a weighing compartment (2) that is delimited by a draft shield (4), wherein at least one vertical wall (8) of the draft shield is formed as a component of a stationary part of the balance (1), with at least one thermoelectric module (16) arranged outside of the weighing compartment (2) and thermally connected to the stationary part of the balance (1), wherein the thermoelectric module (16) is arranged near the stationary part of the balance (1) in a lower portion of the balance, the at least one vertical wall (8) has a lower end portion in thermal connection with the thermoelectric module (16), and the vertical wall (8) is configured in a such a way that a temperature gradient develops in the vertical wall (8), wherein the temperature increases from the bottom to the top of the wall (8), **characterized in that** the cold side of the thermoelectric module (16) is in contact with a supporting part of the balance (1) the hot side facing towards the outside.

2. Balance (1) according to claim 1, **characterized in that** the stationary part of the balance (1), as a supporting part of the balance (1), has a floor plate (11) extending over the entire length of the balance (1) and consisting of a material with good thermal conductivity, said floor plate (11) being in thermal connection with the thermoelectric module (16).

3. Balance (1) according to claim 1 or 2, **characterized in that** the stationary part of the balance (1) includes a balance housing (10) surrounding a measuring cell compartment (9), wherein the stationary vertical wall (8) is configured as a separating wall between the weighing compartment (2) and the measuring cell compartment (9).

4. Balance (1) according to claim 3, **characterized in that** the air in the measuring cell compartment (9) has a vertical temperature gradient, wherein the temperature increases in the upward direction.

5. Balance (1) according to one of the claims 1 to 4, **characterized in that** the air in the weighing compartment (2), at least in the vicinity of the weighing pan (3), has a vertical temperature gradient, wherein the temperature increases in the upward direction.

6. Balance (1) according to one of the claims 1 to 5, **characterized in that** the temperature difference between the upper end and the lower end of the stationary vertical wall (8) and/or of the weighing compartment (2) is at most around 1°C, in particular in a range up to 0.5°C.

7. Balance (1) according to one of the claims 3 to 6, **characterized in that** the temperature difference between the upper end and the lower end of the measuring cell compartment (9) is at most around 1°C, in particular in a range up to 0.5°C.

8. Balance (1) according to one of the claims 2 to 7, **characterized in that** the floor plate (11) has a temperature that is no higher than a few tenths of a degree above ambient temperature, but is preferably a few tenths of a degree below ambient temperature.

9. Balance (1) according to one of the claims 2 to 8, **characterized in that** the at least one thermoelectric module (16) is attached to the floor plate (11) with the cold side of the thermoelectric module (16) facing towards the floor plate (11) and the hot side facing towards the outside.

10. Balance (1) according to one of the claims 2 to 8, **characterized in that** the balance (1) comprises a heat-conducting body (15) connected to the floor plate (11) and the vertical wall (8), and that the thermoelectric module (16) is attached to the heat-conducting body (15) with the cold side of the thermoelectric module (16) facing towards the heat-conducting body (15) and the hot side facing towards the outside.

11. Balance (1) according to one of the claims 1 to 10, **characterized in that** the thermoelectric module (16) is at its hot side connected to a heat sink (17) to provide a rapid removal of heat into the ambient air.

12. Balance (1) according to one of the claims 3 to 11, **characterized in that** the weighing-cell electronics (20) is arranged in the upper half, in particular in the top third of the measuring cell compartment (9), whereby a heat flow is generated from the weighing cell electronics (20) to the stationary vertical wall (8) and said heat flow enhances the temperature gradient in the stationary vertical wall (8).

13. Balance (1) according to one of the claims 1 to 12, **characterized in that** the material thickness of the at least one vertical wall (8) decreases in the upward direction.

14. Balance (1) according to one of the claims 1 to 13, **characterized in that** the balance has an indicating- and operating unit (13) which can be brought into thermal contact with the floor plate (11) to remove the heat caused by the power dissipation of the indicating- and operating unit (13).

15. Balance (1) according to one of the claims 1 to 14, **characterized in that** a front wall (5) forms part of the draft shield (4) delimiting the weighing compartment (2), and that the front wall (5) has a metallic frame that is connected to the floor plate (11).

## Revendications

1. Balance (1) comprenant un espace de pesage (2) entourant un plateau de balance (3) de tous les côtés, qui est délimité par un pare brise (4), dont au moins une paroi (8) verticale fait partie d'une partie fixe de la balance (1), au moins un module (16) thermoélectrique, qui est placé en liaison thermique avec la partie fixe de la balance (1) à l'extérieur de l'espace de pesage (2), le module (16) thermoélectrique étant placé à proximité de la partie fixe de la balance (1) dans la zone inférieure de la balance, et la au moins une paroi (8) verticale étant en liaison thermique par son extrémité inférieure avec le module (16) thermoélectrique et étant conçue de telle sorte qu'un gradient de température se forme dans la paroi (8) verticale, la température de cette paroi (8) augmentant du bas vers le haut, **caractérisée en ce que** le côté froid du module thermoélectrique est en contact avec une partie portante de la balance (1) et le côté chaud du module (6) thermoélectrique est dirigé vers l'extérieur.

2. Balance (1) selon la revendication 1, **caractérisée en ce que** la partie fixe de la balance présente comme partie portante une plaque de fond (11) s'étendant sur toute la longueur de la balance (1) à base de matériau bien thermoconducteur, qui est en liaison thermique avec le module (16) thermoélectrique.

3. Balance (1) selon la revendication 1 ou 2, **caractérisée en ce que** la partie fixe de la balance (1) entoure en tant que boîtier de balance (10) un espace de cellule de mesure (9), la paroi (8) verticale fixe étant réalisée sous la forme d'une paroi de séparation entre l'espace de pesage (2) et l'espace de cellule de mesure (9).

4. Balance (1) selon la revendication 3, **caractérisée en ce que** l'air présente dans l'espace de cellule de mesure (9) un gradient de température vertical, la température augmentant du bas vers le haut.

5. Balance (1) selon l'une quelconque des revendications 1 à 4, **caractérisée en ce que** l'air dans l'espace de pesage (2), au moins dans l'environnement du plateau de balance (3), présente un gradient de température vertical, la température augmentant du bas vers le haut.

6. Balance (1) selon l'une quelconque des revendications 1 à 5, **caractérisée en ce que** la différence de température entre l'extrémité supérieure et l'extrémité inférieure de la paroi (8) verticale fixe et/ou de l'espace de pesage (2) se situe au maximum à 1°C, en particulier à des valeurs allant jusqu'à 0,5°C.

7. Balance (1) selon l'une quelconque des revendications 3 à 6, **caractérisée en ce que** la différence de température entre l'extrémité supérieure et l'extrémité inférieure de l'espace de cellule de mesure (9) se situe au maximum à 1° C, en particulier à des valeurs allant jusqu'à 0,5°C.

8. Balance (1) selon l'une quelconque des revendications 2 à 7, **caractérisée en ce que** la plaque de fond (11) présente une température qui est au maximum supérieure de quelques dixièmes de degrés à la température ambiante, mais de préférence inférieure de quelques dixièmes de degrés à la température ambiante.

9. Balance (1) selon l'une quelconque des revendications 2 à 8, **caractérisée en ce que** le au moins un module (16) thermoélectrique est placé avec son côté froid sur la plaque de fond (11), son côté chaud étant dirigé vers l'extérieur.

10. Balance (1) selon l'une quelconque des revendications 2 à 8, **caractérisée en ce qu'**un corps de déviation de chaleur (15) est présent, lequel est en liaison avec la plaque de fond (11) et la paroi (8) verticale, et **en ce que** le module thermoélectrique (16) est placé avec son côté froid sur le corps de déviation de chaleur (15), le côté chaud du module (16) thermoélectrique étant dirigé vers l'extérieur.

11. Balance (1) selon l'une quelconque des revendications 1 à 10, **caractérisée en ce que** le module (16) thermoélectrique est equipé sur son côté chaud d'un corps de refroidissement (17) pour une évacuation de chaleur rapide vers l'air ambiant.

12. Balance (1) selon l'une quelconque des revendications 3 à 11, **caractérisée en ce que** l'électronique de pesage (20) est disposée dans la moitié supérieure, en particulier dans le tiers supérieur, de l'espace de cellule de mesure (9), un flux de chaleur renforçant le gradient de température dans la paroi (8) verticale fixe s'effectuant depuis l'électronique de pesage (20) vers la paroi (8) verticale fixe.

13. Balance (1) selon l'une quelconque des revendications 1 à 12, **caractérisée en ce que** l'épaisseur de matériau de la au moins une paroi (8) verticale diminue du bas vers le haut.

14. Balance (1) selon l'une quelconque des revendications 1 à 13, **caractérisée en ce qu'**une unité d'affichage et de commande (13) est présente, laquelle peut être amenée dans un contact thermique avec la plaque de fond (11) pour l'évacuation de chaleur de sa puissance dissipé.

15. Balance (1) selon l'une quelconque des revendications 1 à 14, **caractérisée en ce qu'**une paroi avant (5) fait partie du pare brise (4) délimitant l'espace de pesage (2) et **en ce que** cette paroi présente un cadre en métal qui est relié à la plaque de fond (11).
